# EUROPEAN PATENT SPECIFICATION

(11) **EP 3 520 370 B1**
(45) Date of publication and mention of the grant of the patent: **02.09.2020**
(21) Application number: 17787119.1
(22) Date of filing: 03.10.2017
(51) Int. Cl.: H04L 29/06, H04L 9/32, G06F 16/182, G06F 16/27, G06F 21/64, G06Q 20/06

(54) **A DECENTRALISED DATABASE**
DEZENTRALISIERTE DATENBANK
BASE DE DONNÉES DÉCENTRALISÉE

(30) Priority: 03.10.2016 US 201662403508 P
(43) Date of publication of application: 07.08.2019
(73) Proprietor: XSB Europe Limited, Co. Kilkenny R95 K067 (IE)
(72) Inventor: DE FOUQUIERES, Pierre-Louis, Kilkenny , Co. Kilkenny R95 K067 (IE)
(74) Representative: White, Andrew John
(86) International application number: PCT/EP2017/075047
(87) International publication number: WO 2018/065395

(56) References cited:
- US-B1- 9 390 154
- Alexander Chepurnoy: "Interactive Proof-of-stake", , 11 January 2016 (2016-01-11), XP055446386, Retrieved from the Internet: URL:https://arxiv.org/pdf/1601.00275.pdf [retrieved on 2018-01-31] cited in the application

## Description

### Introduction

This invention relates to a decentralised database, and to an efficient method for maintaining, updating and verifying data held in such a decentralised database.

Throughout this specification, the terms "decentralised database" and "decentralised database system" shall be understood to encompass any type of database in which the data held in the database is distributed across a plurality of connected peer devices, such that each peer device is connected to at least one other peer device in a network, and at least a portion of the data held in the database is stored in each of the peer devices which constitute the decentralised database. The data held as part of the database is not limited in nature, and will vary depending on the use case which is envisaged. In addition, the data will comprise a ledger of accounts and corresponding account balances. Each account has an account balance which is equal to or greater than zero. The account balances are tracked by the decentralised database system, with a copy of the account table being held on the ledger of each peer device. Normally, each deployment of the decentralised database system will have a token-type specific to that database deployment, with ownership of the token being defined by the balances in the account table for that decentralised database system.

Throughout this specification, the term "peer" or "peer device" shall be understood to encompass any type of operating device, but will typically be a computer, which is capable of communicating data over a network with other peer devices, and also comprises memory, for storing at least a portion of the data held on the decentralised database, and a processor. Each peer device is capable of broadcasting data to the network of peer devices, by sending a data packet to the peer devices to which it has a direct connection, possibly in the form of a TCP connection. The receiving peer devices will in turn send the data packet to those peer devices to which they have a direct connection, and so on, until the data packet has reached every peer device, and in this way it is possible to broadcast a data packet across the entire network. Each peer device maintains a set of connections to other peer devices for the purpose of being able to broadcast data to all peer devices.

Each account in the decentralised database system is defined by an identifier and has a corresponding account secret associated with the account. The account secrets are held on the peer devices, and a peer device can generate an instruction for any account for which it holds the corresponding account secret. In this way, a peer device can be said to control an account when the peer device holds the account secret for that account.

It will be readily appreciated that the data held by the decentralised database, which includes the account table, will change over time, in particular as instructions are processed by the decentralised database system. The state of the database is updated by processing these instructions and a snapshot of the data currently held on the database is recorded in each block, for each generation of the database. In this manner, the state of the database is updated periodically by all peer devices.

A first block is created before the deployment of the decentralised database system and this first block is pre-loaded on all peers in the decentralised database system. Each block, except the first block, refers to the block which directly preceded it, so that each block is part of a set of blocks which is serially connected back to the first block. Such a chain of blocks is used to record any changes made to the database over time, from its initial known state to its current state. The generation number of a block is equal to the number of blocks in the chain ending at said block and starting at the first block, while an ancestor to said block is any block of lower generation number in such a chain. As different peers can produce different blocks, the set of blocks across all peers, in general, forms a rooted tree (with the first block as the root), which is not necessarily a single chain. For each generation of the database, peers collaborate to add a new block to the decentralised database system.

Each new block will hold a record of the database, in the form of a snapshot of the data currently held on the decentralised database. The snapshot of the data held on the decentralised database can be hashed to produce a cryptographic hash. It will be understood that the hashing algorithm used may be selected for the purpose best suited, but could be for example one of the SHA algorithms.

Each new block will also refer to the block which directly preceded it by including the cryptographic hash of the preceding block, along with a hash of a list of instructions which were processed between the snapshot of the preceding block and the snapshot corresponding to the data currently held on the decentralised database.

The cryptographic hash of the preceding block, the hash of the list of instructions, and the cryptographic hash of the data snapshot corresponding to the block are jointly referred to as the state information of the block.

Each peer device operates independently and stores a block which is referred to as its top block. If a peer device wishes to query the decentralised database, the peer device runs the query on the data held in the version of the database which corresponds to its top block. For example, if a peer wants to know the balance of an account, then the peer will look up the account's balance in the account table of the peer's own top block.

The desired physical outcome of the system is that all peers have the same block as the top block, at all times. However, it will be appreciated that this may not always be the case.

A user of the system can make a peer device submit, for processing by the system, an instruction from an account controlled by that peer device. Any peer device for which this instruction is included in the list of instructions corresponding to its top block will have the effect of the instruction reflected in queries the peer device makes. The results of queries made by a peer device on behalf of a user may be shown to the user through a display associated with the peer device. Assuming that all peers have the same top block, as is desired, then the result of queries to the database will be the same no matter which peer device they are carried on.

The decentralised database forms a new block periodically, as mentioned hereinbefore. Each generation of the decentralised database system builds upon the previous generation of the system by executing instructions received, and in this manner an updated state of the decentralised database system is created. At the end of the creation of each generation of the system, the decentralised database system follows a verification protocol, which is also referred to as a sign-off exchange, and which signs-off on the consensus reached for the data held in the decentralised database and forms a new, subsequent block towards the end of the completion of the sign-off exchange. There are a series of steps involved in the creation and verification of each generation of the system, and each step has a fixed amount of time in which it is scheduled to complete its act(s). It will be appreciated that the lengths of time allocated to each step are calibrated to the performance characteristics of the particular hardware architecture used in the decentralised database system, in order to ensure that each step has sufficient time to complete under normal operating conditions. The peer devices will be time synchronised to facilitate the timing of the steps of the verification protocol. Since each generation is allocated the same time interval to complete which is known in advance, time is divided into even intervals, each of which has a sequential generation number.

In such decentralised database systems, the stake of an account is equal to the token balance in that account. A stake holder is an account which has a non-zero stake. When a sign-off is generated for an account and used in the sign-off process, this account is said to be a signer. When a signer is recognised as having signed a particular block through being marked as such in a bit array (which is discussed in greater detail later), then that signer is termed a verifier. When the sign-off of a verifier is included in a witness list, then the verifier is termed a witness. The marginal weight of a block is equal to the sum of account stakes of verifiers to that block.

The weight of a block is equal to the sum of the marginal weights of the sequence of blocks going back to the root of the tree of blocks, including the last block itself. The top block of each peer is the block of highest weight in that peer's memory amongst blocks of a generation one less than the current generation. Ties between blocks of the same weight are resolved by choosing the block whose hash is the highest number when represented as an integer. If no block meets the criteria of being of the right generation, then the peer builds empty blocks on top of the block of highest weight of the last generation in its memory previous to the current one. An empty block is a block with no instructions and an empty set of verifiers.

Upon each generation of the system being created, token amounts are credited to each account which was a verifier in the preceding block, before processing any instructions for a new block. The amount credited to each account may be consistently the same predetermined proportion of its stake. In addition, each instruction included in a block incurs a charge, in terms of tokens to the account which generated it, at a level which depends on the type of instruction. These token amounts should preferably be chosen having a monetary value such that operators of peers can more than cover their costs by having their accounts be verifiers, and the charge for each instruction is higher than the cost to the system in processing it.

In such a manner, accounts are charged for the system handling instructions on behalf of the account, and are rewarded for participating in the verification of the state information of a block.

Throughout this specification, the term "sign-off' shall be understood to refer to a cryptographic signature by an account of the state information of a block. Sign-offs are used as part of the process whereby each generation of the decentralised database system is verified and a consensus is established on the updated state of the decentralised database.

For large decentralised databases, there is a problem with the process of verifying the state of the database and reaching a consensus on the updated state of the decentralised database. In order to carry out the verification protocol, a number of accounts are required to sign-off on the updated state of the database system. However, such accounts need to be incentivised to take part in such a signing-off process. It is for this reason that the token rewards described above are used. However, in large systems, if all of the accounts were to be used as signers, and verifiers, and witnesses, then the network bandwidth requirements between peer devices (i.e. communication cost) would be too high for the system to be feasible. Therefore, in the prior art, a selection of accounts (often a single account), which is typically pseudo-random, is made from available accounts and only these selected accounts are used as signers, verifiers and witnesses. As only these selected accounts receive a reward, users have typically not participated in the verification process as the likelihood that their account would be selected and would receive a reward was quite low. Participation rates therefore drop as a result and this is undesirable from the perspective of the verification protocol of such decentralised database systems.

Block chain verification protocols are essentially either a proof of work protocol, or, a proof of stake protocol. The proof of work protocol was the first protocol which was used, and is still used in Bitcoin, for example. However the proof of work protocol suffers from relatively large mining costs. For the Bitcoin example, these mining costs are estimated to be of the order of $1 billion per annum (*c.f* "Blockchain - The Trust Disrupter"; Equity Research; Credit Suisse; August 2016; Figure 28 and Figure 33). This amount is effectively paid by coin holders as debasement of their coin balances in Bitcoin which is clearly undesirable.

The proof of stake protocol is typically viewed as a way to select the creator of the next block from the set of coin holders, rather than letting it be one of the miners as in the proof of work protocol. In "Proof of Stake versus Proof of Work"; September 2015; published by The Bitfury Group, it was mentioned that "The idea behind proof of stake is simple: instead of mining power, the probability to create a block and receive the associated reward is proportional to a user's ownership stake in the system". In order to avoid being tied to a single user, and to evenly distribute the new coin participation incentives coming with each block, the creator is selected at random. This is problematic as the creator is only rewarded in this scenario. And for systems requiring actions by a leader, the leader election process also presents difficulties as discussed in "A Provably Secure Proof-of-Stake Blockchain Protocol"; Technical Report 889, 2016; Aggelos Kiayias, Alexander Russell, Bernardo David and Roman Oliynykov: "A fundamental problem for Proof of Stake-based block chain protocols is to simulate the leader election process". Variants of the proof of stake protocol include selecting a small subset of users rather than a single user.

In either case, the signatures of the selected users act as evidence to others that the created block is the true one. Having all users sign is not usually considered because, done in a straight-forward way, it is not a usable scheme. All peer machines store a copy of blocks, which would accumulate to an impractically large amount of information. For reference, the Bitcoin block size is 1MB, as this is kept intentionally small, and this size of block would imply a maximum of 4000 signatures.

More seriously still, it is not realistic to communicate all signatures to all peers in a timely manner in a system which is open to the public such that the number of accounts can be in the millions, or possibly even in the billions.

There is no direct way of reducing the storage and communication cost, because a consequence of being secure is that cryptographic signatures have a high level of entropy, and so cannot be compressed effectively using a lossless data compression algorithm.

Therefore, the problem discussed above, regarding a selection being made from available accounts and only these selected accounts being used as signers, which ultimately results in lower participation rates, remains and this is undesirable from the perspective of the verification protocol of such decentralised database systems.

Furthermore, the act of selecting one or more accounts to participate in the verification protocol in conventional proof of stake systems opens it up to so-called "grinding" attacks (*c.f.* "Interactive Proof-of-stake"; Alexander Chepurnoy; January 2016; ArXiv: 1601.00275), whereby users can influence the consensus reached. Potentially this could lead to an attacker taking control of the system (and receiving all new coins) or otherwise greatly undermining the system, by accumulating bias towards themselves and even carrying it forward in time. Even without grinding, malicious users can be over-represented in the selected accounts simply by chance, which can open the possibility of attacks despite the amount of malicious users being low enough to in theory not pose a problem. This is a central problem in the prior art.

From an economic perspective, the irregular and probabilistic payment of new coins in proportion to current holding is less preferable then a regular and deterministic one, as it is conventional to receive yield on investments, for example in the form of interest.

Across both proof of work and proof of stake, all systems are open to so-called 'forking', whereby a majority of peers initially settle on the same block to run queries against, and subsequently a majority of peers settle on a different block to run queries against which does not have the former block as an ancestor. In major systems such as Bitcoin, forking occurs routinely as miners have an incentive to create blocks with a block which they previously created as predecessor, even when said predecessor is not of highest weight at the time. Forking is a major concern as it leads to instructions being reverted, the possibility of which implies that an instruction can never be considered final. In purely proof of work systems, forking cannot be prevented, as miners are not constrained in which block they use as predecessor when creating new blocks. In existing proof of stake systems, there is always a probability that sufficiently many of the one or more selected creators are malicious and can therefore cause a fork, even if the stake held by malicious users is relatively low; a probability that can be increased through the use of grinding. This is a fundamental problem which does not find a satisfactory solution in the orior art.

Further problems found in prior art systems also relate to problems as a result of selecting a single creator as this can leave the system open to a denial of service attack in case the chosen leader is malicious. Moreover, in other systems, which accounts are able to be chosen to receive new coins/tokens/rewards as a result of participating in the verification protocol as a signer for example, can be limited to a minority, which can disadvantage the majority of users.

US9390154 B1 describes a database system and more particularly to methods and apparatus for implementing a database system across multiple devices in a network. It is a goal of the present invention to provide a method and/or system that overcomes at least one of the above mentioned problems and promotes the participation of accounts in the verification process.

### Summary of the Invention

The present invention is directed to a decentralised database system comprising a plurality of peer devices, as further defined in claim 1.

The advantage of providing the verification protocol is that it can be used to prove with a necessarily high probability that a large number of sign-offs exist, whilst only requiring a relatively small subset of these sign-offs to be exhibited. Moreover, not a single peer device is required to obtain the full set of sign-offs. The sign-offs are collected in a distributed manner. Following the present invention, all accounts who wish to partake in the verification protocol are enabled to do so and will receive a reward for doing so. This is in contrast to the prior art solutions which cannot allow for this to occur. In this way, the participation rates remain high and this is a very beneficial aspect of the verification protocol for the decentralised database system of the present invention. Moreover, the solution of the present invention is less vulnerable to "grinding" attacks as users cannot effectively influence the sign-off collection process apart from in the trivial way of withholding sign-offs of accounts they control. Furthermore, the verification process of the present invention does not have any single peer which could be a bottleneck, therefore the verification process is not open to a denial of service attack due to any single malicious peer.

In a further embodiment, a peer device is provided with an enumeration of one or more verifying accounts from at least one other peer device, whereby, each verifier in the enumeration of one or more verifying accounts provided relates to an account controlled by the other peer device for which the other peer device claims to have a valid sign-off for, and/or, an account controlled by a different peer device for which the other peer device has been informed by the different peer device that the different peer device claims to have a valid sign-off for; the peer device confirms the validity of the enumeration of verifying accounts received from the other peer device by using a challenge-response protocol; whereby, the challenge-response protocol comprises selecting a subset of verifying accounts from the enumeration of verifying accounts; and, successfully responding to the challenge-response protocol comprises the peer device receiving sign-offs for the selected subset of verifying accounts; such that, the subset of verifying accounts which is selected is unknown to the other peer device when the other peer device provides the enumeration of verifying accounts.

In a further embodiment, the challenge-response protocol comprises the peer device selecting the subset of verifying accounts from the enumeration of verifying accounts, and, the peer device challenging the other peer device to provide sign-offs for the selected subset of verifying accounts; and, the challenge-response protocol further comprises the other peer device providing the sign-offs for the selected subset of verifying accounts to the peer device in order to successfully respond to the challenge-response protocol.

In a further embodiment, the at least two peers are configured to enumerate the subset of verifying accounts using a pseudo-random method of selecting the subset of verifying accounts from the enumeration of verifying accounts.

In a further embodiment, the pseudo-random method of selecting the subset of verifying accounts from the enumeration of verifying accounts is achieved by using a hash of the enumeration of verifying accounts as the seed to a cryptographically secure pseudo-random number generator.

In a further embodiment, a set of blocks is maintained by each peer device; a new block is generated by each peer device periodically and the new bock is added to the set of blocks; and, prior to adding the new block to the set of blocks, the updated state of the decentralised database system is agreed upon.

In a further embodiment, the evidence data is smaller in data size than the data size of the set of sign-offs which the evidence data verifies as existing.

In a further embodiment, the decentralised database system splits the accounts of the decentralised database system into groups of accounts; peer devices receive sign-offs from other peer devices for accounts which are in the same group(s) as any accounts controlled by the peer devices.

In a further embodiment, the updated state of the decentralised database system is verified by a plurality of separate peer devices in a distributed fashion, wherein none of the plurality of the peer devices receives all of the valid sign-offs from all of the verifiers in the decentralised database system.

In a further embodiment, each peer device is capable of transmitting a data packet to all other peer devices in the decentralised database system using the network, such that each peer device is configured to forward packets onto other peer devices which the peer device is connected to, in such a way as to simulate a broadcast network operation.

In a further embodiment, each block is linked to a preceding block and forms a record of the state of the decentralised database system.

In a further embodiment, each new block comprises a cryptographic hash of the record of the state of the decentralised database system from the preceding block, and a hash of a list of instructions which have been applied to the decentralised database system as part of generating the new block.

In a further embodiment, a sign-off is a cryptographic signature. In a further embodiment, every account comprises an account identification number and an account secret, whereby the account secret is only known by the peer controlling that account.

In a further embodiment, each account is characterised by an elliptic curve cryptographic key pair, with a public key acting as the account identifier and a private key acting as the account secret.

In a further embodiment, the decentralised database system further comprises means for selecting a leader peer for collation of instructions; whereby, each peer device follows an account selection procedure to ascertain if it is the leader peer during the updating of the state of the decentralised database system; wherein, the account selection procedure comprises hashing signatures of witness in a most recent block to provide a hash output and converting this hash output to an integer which is used to generate an account identification which becomes the leader account and the leader peer is the peer device which controls the leader account.

In a further embodiment, the decentralised database system further comprises means to detect and respond to behaviour from peer devices which may constitute a denial of service attack on one peer device, such as by causing the one peer device to wastefully consume processing capacity, memory, or network bandwidth.

In a further embodiment, peers identify which accounts they control by sending a signature of their network address with each of their accounts when connecting to another peer, which identification scheme is used throughout the network to prevent a denial of service attack from being replicated.

In a further embodiment, each account has an associated account balance which is held in a ledger stored on each peer device.

In a further embodiment, a programmable device, which is not a peer device, is connected to the network and is used to communicate with one or more peer devices.

In a further embodiment, each peer device of the decentralised database system further comprises a final block, whose data is used to run queries on, such that the final block of each peer device is only updated with the value of a most recently generated block when the most recently generated block satisfies a certain condition. In a further embodiment, the certain condition is that the most recently generated block has a marginal weight greater than two thirds of the total of all account stakes for that block, such that the marginal weight of a block is given by the total stake of verifying accounts for that block. This condition ensures that forking cannot occur, in a setting where less than one third of the stake is held by malicious users (which is in any case a necessary assumption as no distributed database is theoretically possible having more malicious users). This can be seen as non-malicious users will only ever sign-off on a single block per generation, therefore any two blocks of a given generation can have marginal weights which add up to no more than four thirds of the total stake, so that only one block can satisfy the final block condition. The two thirds proportion is optimal in that for any lower proportion, more than one block may satisfy the condition, and for any higher proportion, the malicious users can prevent any block from satisfying the condition. Nonetheless, other proportion levels can still help hinder the occurrence of forking.

In a further embodiment, a change to the pre-determined parameter which causes an increase in the data size of the sign-offs for the selected subset of verifying accounts will cause a decrease in the probability that the other peer could fraudulently successfully respond to the challenge-response protocol; and, a change to the pre-determined parameter which causes a decrease in the data size of the sign-offs for the selected subset of verifying accounts will cause an increase in the probability that the other peer could fraudulently successfully respond to the challenge-response protocol.

In a further embodiment, the pre-defined parameter is chosen to ensure that there is a less than 10⁻⁵ probability that the particular peer would be capable of producing, using 10¹² hash evaluations, valid evidence data with fraudulently added verifiers having stake adding up to 1% of the total stake for the corresponding block.

In a further embodiment, the enumeration of verifying accounts comprises a verifier bit array, whereby each bit element of the verifier bit array signifies whether an associated account is a verifying account.

In a further embodiment, the verifier bit array comprises a plurality of bit elements, and each bit element signifies whether an associated account has changed from being a verifying account to not being a verifying account, and/or, whether an associated account has changed from not being a verifying account to being a verifying account, where the bit array is compressed. In a preferred embodiment, the bit array is compressed using run length encoding and entropy coding for the purposes of communication and/or storage advantages.

In a further embodiment, the right for an account to create a sign-off may be delegated by that account to another account, the stake of each account being correspondingly adjusted to account for the total balance of accounts for which it has the right to create sign-offs. In such cases, the account delegating its sign-off right, termed the principal, retains its token balance but assigns its stake to the account receiving the sign-off right, termed the proxy. It is possible for multiple principals to delegate to the same proxy. In one embodiment, the reward attached to the principal's stake is received by the proxy, while in another embodiment the reward is shared by the principal and the proxy. The principal issues instructions to initiate the delegation and to end the delegation, and the relationship between the principal and the proxy accounts is recorded in the ledger.

In a further embodiment, an account is debited a penalty amount when that account has submitted signatures for two or more blocks of the same generation

The present invention is further directed towards a method of operating a decentralised database system, the decentralised database system comprising a plurality of peer devices, as further defined in claim 9,

As above, the advantage of providing the method of operating a decentralised database system which follows the current invention is that the steps used in the method can prove with a necessarily high probability that a large number of sign-offs exist, whilst only requiring a relatively small subset of these sign-offs to be exhibited. Moreover, not a single peer device is required to obtain the full set of sign-offs. The sign-offs are stored in a distributed manner. Following the present invention, all accounts who wish to partake in the verification protocol are enabled to do so and will receive a reward for doing so. This is in contrast to the prior art solutions which cannot allow for this to occur. In this way, the participation rates remain high and this is very beneficial from the perspective of the verification protocol of the decentralised database system of the present invention. Moreover, the solution of the present invention is less vulnerable to "grinding" attacks as users cannot influence the choice of leadership and cannot consequently lead to an attacker taking control of the system by accumulating bias towards themselves. Furthermore, the lack of a single leader means that the decentralised database system of the present invention is not open to a denial of service attack in case the chosen leader is malicious.

In a further embodiment, the method comprises the step of a peer device being provided with an enumeration of verifying accounts from at least one other peer device, whereby, each verifier in the enumeration of verifying accounts provided relates to an account controlled by the other peer device for which the other peer device claims to have a valid sign-off for; the method comprises the step of the peer device confirming the validity of the enumeration of verifying accounts received from the other peer device by using a challenge-response protocol; whereby, the challenge-response protocol comprises the step of selecting a subset of verifying accounts from the enumeration of verifying accounts; and, successfully responding to the challenge-response protocol comprises the step of the peer device receiving sign-offs for the selected subset of verifying accounts; such that, the subset of verifying accounts which is selected is unknown to the other peer device when the other peer device provides the enumeration of verifying accounts.

In a further embodiment, the challenge-response protocol comprises the steps of the peer device selecting the subset of verifying accounts from the enumeration of verifying accounts, and, the peer device challenging the other peer device to provide sign-offs for the selected subset of verifying accounts; and, the challenge-response protocol further comprises the step of the other peer device providing the sign-offs for the selected subset of verifying accounts to the peer device in order to successfully respond to the challenge-response protocol.

In a further embodiment, the at least two peers are configured to carry out the step of enumerating the subset of verifying accounts using a pseudo-random method of selecting the subset of verifying accounts from the enumeration of verifying accounts.

In a further embodiment, the step of pseudo-randomly selecting the subset of verifying accounts from the enumeration of verifying accounts is achieved by using a hash of the enumeration of verifying accounts as the seed to a cryptographically secure pseudo-random number generator.

In a further embodiment, the method comprises maintaining a set of blocks by each peer device; and the method further comprises the steps of: a new block being generated by each peer device periodically and the new block being added to the set of blocks; and, prior to the step of adding the new block to the set of blocks, the method comprises the step of agreeing upon the updated state of the decentralised database system.

In a further embodiment, the new block is smaller in data size than the data size of the set of sign-offs which the evidence data verifies as existing.

In a further embodiment, the method comprises the step of splitting the accounts of the decentralised database system into groups of accounts; and the step of the peer devices receiving sign-offs from other peer devices for accounts which are in the same group(s) as any accounts controlled by the peer devices.

In a further embodiment, the method steps for agreeing upon the updated state of the decentralised database system are carried out by a plurality of separate peer devices in a distributed fashion, wherein none of the plurality of the peer devices receives all of the valid sign-offs from all of the verifiers in the decentralised database system.

In a further embodiment, the method comprises the step of each block being linked to a preceding block and forming a record of the state of the decentralised database system, for each peer device.

In a further embodiment, the method comprises generating each new block to comprise a cryptographic hash of the record of the state of the decentralised database system from the preceding block, and a hash of a list of instructions which have been applied to the decentralised database system as part of generating the new block.

In a further embodiment, the method of creating a sign-off comprises the step of creating a cryptographic signature.

In a further embodiment, the method further comprises the step of selecting a leader peer for collation of instructions; whereby, each peer device follows an account selection procedure to ascertain if it is the leader peer during the updating of the state of the decentralised database system; wherein, the account selection procedure comprises the steps of: hashing signatures of witness in a most recent block to provide a hash output, and, converting this hash output to an integer which is used to generate an account identification which becomes the leader account; and, the method comprises the step of electing the leader peer as the peer device which controls the leader account. It will be understood that other leader election processes, for example other processes described in the prior art, can also be used to select the leader peer.

In a further embodiment, the method carries out steps to detect and respond to behaviour from peer devices which constitute a denial of service attack on a certain peer device, such as by causing the certain peer device to wastefully consume processing capacity, memory, or network bandwidth.

In a further embodiment, the method comprises the step of each peer device of the decentralised database system generating a final block, whose data is used to run queries on, such that the final block of each peer device is only updated with the value of a most recently generated block by the method, when the most recently generated block satisfies a certain condition.

In a further embodiment, the certain condition is that the most recently generated block has a marginal weight greater than two thirds of the total of all account stakes for that block, such that the marginal weight of a block is given by the total stake of verifying accounts for that block.

In a further embodiment, a change to the pre-determined parameter which causes an increase in the data size of the sign-offs for the selected subset of verifying accounts will cause a decrease in the probability that the other peer could fraudulently successfully respond to the challenge-response protocol; and, a change to the pre-determined parameter which causes a decrease in the data size of the sign-offs for the selected subset of verifying accounts will cause an increase in the probability that the other peer could fraudulently successfully respond to the challenge-response protocol.

In a further embodiment, the pre-defined parameter is chosen to ensure that there is a less than 10⁻⁵ probability that the particular peer would be capable of producing, using 10¹² hash evaluations, valid evidence data with fraudulently added verifiers having stake adding up to 1% of the total stake for the corresponding block.

In a further embodiment, a different public key cryptosystem is used. In a further embodiment, a different hash is used. In a further embodiment, a different block cipher is used.

In a further embodiment, additional sources of entropy which are shared by the peers can be used to complement the previous block hash when computing the witnesses for the proof of coverage. The additional sources of entropy include, *inter alia,* the block hash of the previous block, some function of the leader account, or, the output of any multi-party coin-flipping process described in the prior art.

In a further embodiment, there is an instruction to assign, until further notice, all the stake of an account to another account.

In a further embodiment, the stake is calculated based on the account balances of an ancestor to the top block. It will be appreciated that an ancestor to a particular block is some predecessor to the particular block in the chain of blocks.

In a further embodiment, peers are penalised for signing two or more blocks having the same predecessor. This is achieved by having a parallel version of the sign-off exchange, in which all peers participate at the same time as the regular sign-off exchange, to form a set of accounts for which two (or more) sign-offs have been emitted. Instead of collecting sign-offs for a particular block, one per account, this parallel process collects pairs per account, of sign-offs for different blocks having the same predecessor. The block data structure is also augmented to include the corresponding parallel proof of coverage. Each account identified as having duplicate sign-offs is debited, as a penalty, an amount of tokens proportional to its stake. In another embodiment, peers are penalised in an analogous manner for signing any two or more blocks of the same generation. In either embodiments, an account is not credited any tokens for being a verifier whenever its balance is below the penalty for double signing corresponding to its stake. In a further embodiment, the method comprises the further step of debiting an account a penalty amount when that account has submitted signatures for two or more blocks of the same generation.

In a further embodiment, compression can be used when transmitting a bit array of accounts. Specifically by transmitting the difference, using for example an exclusive-OR (XOR) operation, between the bit array in question and the corresponding bit array for the previous generation in compressed form.

In a further embodiment, the block data structure can omit certain fields, such as omitting the snapshot hash as it can be derived from the state of the data held in the database itself corresponding to the block. In a further embodiment, the block data structure can have additional fields, such as to summarise particular properties of the data.

In a further embodiment, any number of different instruction types can be supported by the decentralised database system of the present invention. Instructions are not limited in the data structures which can be used to represent them. On each peer device, in addition to the processing upon inclusion into a block, which can alter the peer device's data, instructions can lead the peer to alter its data on a later generation of the decentralised database system; the requirement of such delayed action by the peer device may be generally recorded as part of the data itself.

In a further embodiment, the accounting of the token balances, in particular with regard to creating tokens for verifiers and destroying tokens in an account upon that account submitting an instruction, can be altered through the use of instructions.

In a further embodiment, certain types of instructions require the signature from more than one account in order to be processed as valid by peer devices.

### Detailed Description of Embodiments

The invention will be more clearly understood from the following description of some embodiments thereof, given by way of example only, with reference to the accompanying drawings, in which:
Figure 1 is a diagram showing the steps involved in an instruction collection process and a verification protocol as are utilised by the present invention;
Figure 2 is a diagrammatic view of a block, in accordance with one embodiment of the present invention;
Figure 3 is a diagrammatic view of a transfer instruction data packet, as would be exchanged between peer devices in one embodiment of the present invention; and,
Figure 4 is a diagrammatic view of a peer device which forms part of a decentralised database system in accordance with one embodiment of the present invention.

In the present invention, a natural order will be used for the management of the accounts of the decentralised database system. The order is based on interpreting the account identifier as an integer. In this manner, a first account precedes a second account in this natural sort order when the account identifier of the first account is represented by a smaller integer than the account identifier of the second account.

Using this natural order of the accounts in the decentralised database system, in a preferred embodiment of the present invention, the accounts may be split into groups in preparation for, and as a part of, the verification protocol, which is also referred to as the signing-off exchange, of the present invention.

It will be recalled that accounts having a greater than zero account balance are stake holders, and these stake holder accounts are used in the verification protocol. In one embodiment, a set of N stake holders is split into approximately √N/10 groups, of between √N and 20√N accounts. In one embodiment, this splitting is obtained by going through the stake holder accounts in natural order and splitting off a group as close to having a 10/√N proportion of the total number of stake holders as possible. If the last group is left with fewer accounts than desired, the last two groups are merged into a single group. It will be understood that the number and sizes of groups can differ in other embodiments.

It may be stated that a peer device belongs to a group when there is an account controlled by that peer device which is in the group. Peer devices advertise their group membership by broadcasting a message containing their network address and the group number. It will be noted that a peer device can belong to any number of groups, but a stake holder account will only belong to one group. With the accounts split into the groups, the protocol of the present invention, as described hereinbelow is used to collect instructions, and to carry out the verification protocol, in this preferred embodiment. In an alternative embodiment, the accounts are not split into groups and the present invention, and in particular the proof of coverage protocol which is at the crux of the present invention, will still operate satisfactorily.

In an embodiment of the present invention, the identifier and secret of each account constitute a public and private key pair of a public-key cryptosystem, and the sign-off for an account is a cryptographic signature generated with said private key. Multiple cryptosystems can be used, such as the RSA cryptosystem or an elliptic curve cryptosystem, and indeed key pairs from different cryptosystems can be used for different accounts within a single deployment of the present invention. It is advantageous to enable peers to use public-private key pairs which they generated independently, that is to say, without need for communication over the network, for new accounts. Alternatively, it can be required in a deployment that all account identifiers be signed by some certificate authority, either one created for the purpose of the deployment, or any certificate authority from the existing public key infrastructure for internet domain names. Requiring such participation of a third party in creating new accounts however subjects the database system to a central point of failure, which undermines its decentralised nature and for this reason is typically considered disadvantageous.

In the present invention, in order to provide an effective instruction collection method, an account selection procedure is used to select an account. The account selection procedure takes a hash as an input and outputs an account identifier pseudo-randomly selected from the set of all accounts, with a probability of selection being proportional to the stake held by then account. In order to achieve this, in a preferred embodiment, the hash input is interpreted as an integer. The integer is then divided by the total stake of the ledger, keeping only the fractional part of the resulting floating point value. This fractional part is used as the quantile of the discrete probability distribution of accounts weighed by stake, where the accounts are sorted in ascending natural order, to select the corresponding account as the selected account.

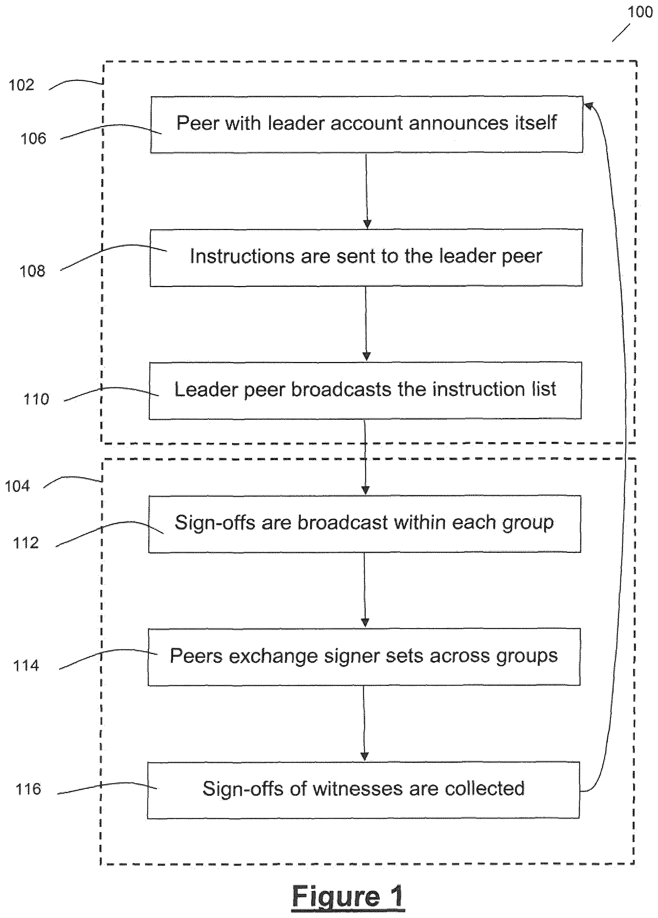

Referring now to Figure 1, a portion of the method of the present invention is indicated generally by reference numeral 100, and in particular some of the steps involved in an instruction collection protocol 102 are shown.

In step 106, as part of the instruction collection protocol 102, each peer device performs the account selection procedure using the hash of the signatures of witnesses of its top block as input hash. If the peer device controls the resulting account, termed the leading account, then that peer device announces itself to the network as a leader peer by broadcasting a data packet specifically designated for this purpose, which is termed a leader announcement message. This leader announcement message data packet contains the leader peer's top block hash and the leader peer's network address, and is signed with the private key of the leader account. If the peer device does not control the resulting account, then for the duration of step 106 the peer device waits to receive a leader announcement message with the block hash corresponding to their top block and such that the signature is a valid signature for the expected leader account. Once a peer receives a leader announcement message meeting this criteria, then the peer device records the network address of the leader peer device.

It will be appreciated that internal clocks of the peer devices may be synchronised through an external means, as is well known in the art. For example, the peer devices may be synchronised using the Network Time Protocol (NTP), and, the peer devices can connect to a NTP server to ensure the peer devices carry out the steps to update the state of the database and create a new generation of the database synchronously.

In step 108, each peer device which has any unprocessed instructions sends these instructions as a data packet, over the network, to the network address it has recorded for the leader peer device. No action is carried out if the peer has no record of the leader network address.

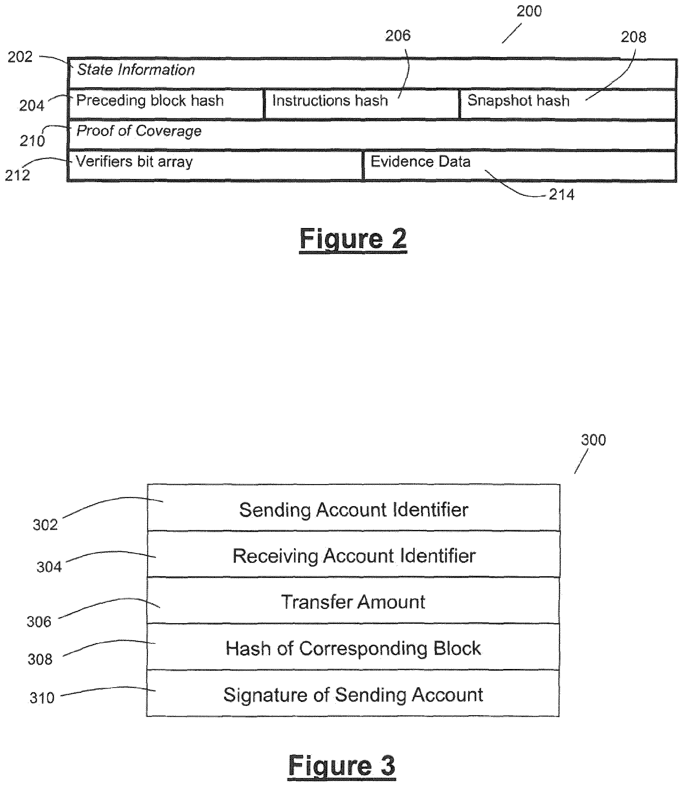

In some embodiments, and specifically those where the decentralised database is used to maintain records regarding a cryptocurrency, a common type of instruction which would be sent is an instruction to transfer amounts of tokens from one account to another account, which is termed a transfer instruction. Turning now to Figure 3, a transfer instruction data packet, which is generally indicated by reference numeral 300, is shown. The data packet 300 comprises a sending account identifier 302, a receiving account identifier 304, a positive integer amount 306 which represents the amount to be transferred from the sending account to the receiving account, the hash of the peer device's top block 308, and a signature 310 which is the sending account's account secret, which is occasionally referred to as the sending account's private key.

Returning to Figure 1, during step 108, each peer which views itself as a leader collects the instructions in the order that it receives them from other peers and also includes any instructions it issues itself into a full list of executable instructions. The leader peer device then applies each instruction, in order, to the data held in the decentralised database. The leader peer device accepts the instruction if it is valid to apply the instruction given the state of the data in the database immediately prior to applying the instruction. For example, a transfer instruction would be invalid if the signature provided in the transfer instruction data packet does not match the sending account, or, if the balance of the sending account is below the amount which is to be transferred.

Applying instructions consists of making changes to the data. In the case of a transfer instruction, for example, the balance of the sending account is reduced by the amount of the instruction and the balance of the receiving account (if it exists in the account table) is increased by the amount of the instruction. If the receiving account does not exist in the account table, a new entry is added to the account table with the receiving account identifier and the amount of the transfer instruction as a balance.

In step 110, each peer device which views itself as a leader peer broadcasts a packet which contains the list of instructions it has received in time order and the corresponding top block hash, and this broadcast packet is signed with the private key of the leading account. Each peer which does not view itself as a leader waits to receive a list of instructions with block hash matching the peer's top block hash and with signature corresponding to the account which it recognises as the leading account. If the peer does not receive this list of instructions with block hash matching the peer's top block hash and with signature corresponding to the account which it recognises as the leading account, by the end of the period, then the peer device uses an empty list of instructions for the subsequent steps described further hereinbelow.

Each peer device then computes a new snapshot of the data held in the decentralised database by applying the list of instructions received from the leader peer to the snapshot corresponding to its own top block.

Having carried this out, the decentralised database will have been updated and it is now necessary to verify the updated generation of the decentralised database system, by implementing the proof of coverage-based verification protocol of the present invention, which is identified by reference numeral 104 throughout this specification. This proof of coverage verification protocol is at the crux of the present invention, and in particular the evidence data used in the proof of coverage verification protocol solves the problems found in the prior art, which were discussed hereinbefore.

As part of the verification protocol 104, in step 112, each peer constructs a state information section of a block data structure using its top block hash, the hash of the list of instructions and the hash of the snapshot computed after having applied the list of instructions.

An example of a block construction of a preferred embodiment is shown in Figure 2, whereby the block is indicated generally by reference numeral 200. The block 200 comprises the state information 202, which comprises the preceding block hash 204, the hash of the instructions list 206, and the hash of the updated snapshot of the data 208. The hash of the updated snapshot of the data 208 is not necessary to include, although it is included in a preferred embodiment. The remainder of the structure of the block 200 is discussed further hereinbelow.

The peer device computes a sign-off corresponding to the state information for each of its accounts. As part of step 112, this computed sign-off is then broadcast along with the block state information section which it is a signature of, to the peer devices in that account's group. As described above, in a preferred embodiment, the accounts will be split into groups as part of the verification protocol of one embodiment of the present invention. Splitting the accounts into groups is advantageous as it reduces the communication cost and guards against malicious operators relative to a straight-forward implementation of the system. An instance of a straight-forward implementation involves each of the device peers broadcasting all of the sign-offs which they produced to the whole network, and subsequently each peer computing the evidence data independently. Such implementation entails a large volume of communication over the network however. Another instance of a straight-forward implementation involves each of the peers broadcasting the index in the ledger's natural order of all accounts which they produced sign-offs for, and subsequently each peer broadcasting any sign-offs from the list of witness accounts which it computes independently. This latter straight-forward implementation reduces the communication requirement by approximately an order of magnitude relative to the former, however, it is not robust in the presence of a malicious operator, who can lead multiple peers to have the wrong verifier set, or withhold a required sign-off. Therefore, a solution in accordance with the protocol of one embodiment of the present invention is to split the accounts into groups. Each group should have a maximum number of accounts.

The proof of coverage verification protocol can be broadly defined, as follows:
a. Within each group, peer devices exchange all sign-offs with each other through a variant of broadcasting restricted to the group.
b. After giving enough time for all peer devices to have the full set of sign-offs within their group, peer devices request the remaining set of verifiers from peer devices belonging to other groups.
   The validity of each sub-set of verifiers is preferably checked using an interactive proof of coverage protocol (which is discussed in greater detail below). The completeness of each sub-set of verifiers is strived for by querying multiple peer devices in the same group and forming the union of valid responses.
c. Each peer device computes the commitment for the non-interactive proof of coverage and obtains required sign-offs from other peer devices (as described below).

Looking at this proof of coverage protocol in some more detail, in step 114, each peer device (peer device A) connects to at least one peer device (peer device B) from each group (group G) which it does not belong to. The at least one peer device (peer device B) from each of these groups then communicates back to the peer device (peer device A) with data relating to which accounts within their respective groups (group G) have signed a particular block. This is the list of signers within each group for which peer device B has a copy of the corresponding sign-off. This enumeration of verifying accounts is preferably transmitted in the form of an array of bits, with each bit element representing whether an account in the respective group has signed or has not signed. For efficiency, in a preferred embodiment, the verifier bit array of accounts with sign-offs can be transmitted as an entropy encoded difference against the verifier bit array for the previous block.

In one embodiment, an interactive challenge-response protocol is used whereby the peer device (peer device A) then picks a random number of accounts, for instance 100 accounts, according to a probability distribution proportional to stake, which were claimed by the at least one peer device from the group (peer device B) to have signed, and challenges the peer device (peer device B) to provide the signatures for the enumeration of the subset of verifying accounts. In one embodiment, it should be noted that as the picking of accounts happens with replacement, so that the total number of distinct accounts which the peer device from the group (peer device B) is challenged on can be less than the number of accounts picked. This is repeated by the peer device (peer device A) until a set number of peers which it has connected to, for instance three, pass the challenge, or one peer has passed the challenge and a predefined time period is exceeded, whichever is earlier.

At this stage in the protocol, a sign-off has been generated for each participating account, and all of these accounts are said to be the signers. The signers which were recognised as having signed a particular block, through being marked as such in a bit array received by a peer device and passing the challenge-response steps laid out above, are defined to be the verifiers for said peer. These verifying accounts are verifying the information in the state information for the block that is being signed off against. As part of this verification process, a subset of these verifiers will now be selected as witnesses on each peer device.

From the list of verifiers for a block, the corresponding set of witnesses can be selected as follows. The hash of the preceding block concatenated with the full verifiers bit array is computed and is used as the seed of a cryptographically secure pseudo-random number generator. In one embodiment, this pseudo-random number generator is implemented by using said seed as the key in an AES block cipher. The sequence of integers from zero to a predetermined number, which may be for example 5000, as input blocks to the cipher gives a sequence of output blocks which are pseudo-random. It will be appreciated that a different predetermined number could be used, however having 5001 inputs has been found, empirically, to provide a good balance between security, which is stronger with higher numbers, and, communication/processing cost, which increases with higher numbers. Each output is used to select an account at random with the probability of selection being proportional to the stake of each account. This set of accounts, after removing any duplicates, is determined to be the set of witness accounts in question. Specifically, in step 116, once step 114 is fully completed, each peer device pieces together the full verifiers bit array from the verifiers bit array of each group. For groups the peer is a member of, this is based on the sign-offs which it has seen, while for groups the peer is not a member of, it is the union of all bit arrays from peers which have passed the challenge. The peer next computes the set of witness accounts from this full verifiers bit array, in the manner already described. Then, for each distinct witness account, the peer device checks if it already has a copy of the sign-off, and if not requests the sign-off from one or more peers in the corresponding group, until all witness sign-offs are obtained. This set of witness sign-offs is used as the evidence data for the proof of coverage protocol, so as to be able to prove with a relatively high probability that a large number of sign-offs exist in the system, which have reached a consensus on the updated state of the decentralised database system, whilst only requiring a relatively small subset of these sign-offs (i.e. the witness sign-offs) to be exhibited in the evidence data.

Referring to Figure 2, the peer device is then finally able to complete the construction of the new, subsequent block 200, using the verifiers bit array 212 and evidence data 214, which may preferably be a list of sign-offs of witnesses, listed in the natural order of corresponding accounts, as evidence for the proof of coverage. In some embodiments, witness sign-offs may be aggregated in a manner other than producing a list, in particular with the aim of reducing the size of said evidence data. Moreover, data in addition to or in place of the sign-offs may be sent by peers responding to the requests for witness sign-offs, which can be used to facilitate the aggregation process producing the evidence data.

For the duration of steps 112 and 114 in Figure 1, each peer awaits new blocks, both sent from other peers, or constructed by itself. In case the recipient peer has not yet seen the preceding block to a block received, it requests the preceding block from the sender peer, potentially doing so multiple times recursively. Each new block seen is recorded as the top block if it is of higher weight than the incumbent top block. Whenever such a change happens, the new top block is sent to all peers to which the peer has a direct connection.

It will be appreciated that the interactive and non-interactive proof of coverage protocols can be combined in different manners to form a verification protocol resulting in valid evidence data. For example, in a further embodiment of the present invention, accounts can be divided into super-groups, which in turn are divided into groups, whereby evidence data is arrived at through the following steps: peers broadcast sign-offs within their group(s); peers piece together the verifier bit array for their super-group(s) by querying member groups through the interactive proof of coverage; for each of their super-group(s) peers produce a valid non-interactive proof of coverage for the verifier set of said super-groups by requesting corresponding witness sign-offs from peers in each group having a witness; peers piece together the full verifier bit array from a copy of the non-interactive proof of coverage requested for each super-group; peers produce valid evidence data for the full verifier set by requesting corresponding witness sign-offs from peers in each group having a witness.

As can be seen from the preceding description, the proof of coverage protocol is an important aspect of the present invention. As such, this proof of coverage protocol will now be substantiated in greater detail with reference to the mathematical modelling which underpins its effectiveness.

Detailing the proof of coverage protocol of the present invention, it can be said that for a given enumeration of verifying accounts, there is an interactive protocol for peer device B, who knows the full enumeration of verifying accounts, to prove to peer device A, with high probability, that there have been close to the total stake worth of accounts which have signed-off on the latest snapshot of the database. We assume that peer device A has the latest ledger - otherwise the peer device would not be able to check that the sign-offs carry any stake. The steps of the interactive version of the protocol are broadly defined as follows:
- Commitment: Peer device B gives the enumeration of verifying accounts (i.e. the set of accounts for which it has sign-offs), preferably in the form of a bit array, as discussed hereinabove, to peer device A.
- Challenge: Peer device A selects a random number *n* of these (the selection is made with replacement, with duplicates then removed, so the final number may be less than *n* in some circumstances) set of accounts and challenges peer device B to provide the sign-offs for the selected accounts.
- Response/Proof: Peer device B provides the sign-offs for the accounts selected by peer device A.

If peer deice B attempts to falsify the protocol by not having sign-offs for a proportion *p* of the set which he claims, peer device A has a probability (1-*p*)ⁿ of being fooled, i.e. receiving a correct response. Peer device B has no way of increasing this probability as the peer device B knows nothing about which account sign-offs will be challenged at the commitment stage, and refusing to respond is equivalent to providing an invalid response in terms of convincing peer device A. For peer device A to reach a confidence of 1-ε that less than a proportion *p* of peer device B's claimed signers were fabricated, the peer device simply needs to use *n*=log(ε)/log(1-*p*), as this makes (1-*p*)*ⁿ*=ε. For example, to reach a confidence of 95% that at least 99% of the claimed sign-offs exist, peer device A would select *n*=299 to generate the challenge.

In general, the scheme works as (1-*p*)*ⁿ*=e^{*n*log(1-*p*)}< e^{-*np*}, which demonstrates the key exponential scaling of ε in *n.* Scaling in *p* is of lesser importance as for this application it does not need to be very small.

This model protocol extends straight-forwardly, as used in a preferred embodiment, to the case where sign-offs have an associated stake. In that case, peer device A must make each of the *n* choices according to a probability distribution proportional to the stake of each account, and *p* then corresponds to the proportion of the stake for which peer device B does not have corresponding sign-offs.

The preferred embodiment of the present invention, uses a non-interactive variant of the aforementioned model protocol. In such a non-interactive protocol, peer device B generates a pseudo-random list of numbers in the interval [0,1) using the hash of peer device B's commitment as the seed to a cryptographically secure pseudo-random number generator. Each number corresponds to a relative position in the cumulative sum of stakes for the list of committed accounts, and in this way maps to an account. The proof response then consists of the sign-offs for the first *n* randomly generated accounts (this is a cryptographically secure pseudo-random selection of *n* accounts which are weighed by stake). In this protocol, it is clear that peer device A is not required to make the selection of *n* accounts as the pseudo-random selection of *n* accounts is used instead.

As before, we are interested in the probability that the proof response can be formed for this alternative non-interactive protocol. If peer device B tries once to falsify the result by not having sign-offs for a proportion p of the set which it claims to have, the probability is calculated as (1-*p*)*ⁿ.* In this non-interactive protocol, it is possible that peer device B would try to use multiple different commitments in order to generate a valid proof response. However, the cost of these *r* attempts involves the same number of hash evaluations. By the property of secure cryptographic hashes, the search for a valid proof cannot be done at lower cost than that of these *r* hash evaluations. For peer device A to reach a particular level of confidence 1-ε in this non-interactive protocol, we therefore need *n* to be such that (1-(1-*p*)*ⁿ*)*^{r}* = 1 - ε.

As (1-(1-*p*)*ⁿ*)*^{r}*> 1-*r*(1-*p*)*ⁿ*, so ε= 1-(1-(1-*p*)*ⁿ*)*^{r}* < *r*(1-*p*)*ⁿ* < *r e^{-n p,}* we see that an attempt to forge a false proof by making use of more computational resources, as measured by *r,* is easily defeated with only a logarithmic increase in *n.* The scaling in *p* is again of little importance as the proof only needs to demonstrate that the proportion of all available stake which signed is above some threshold, e.g. to prove over 50% of the stake was signing when all accounts have sign-offs, *p* can be taken as high as 0.5, although it would be typically be taken as a lower value.

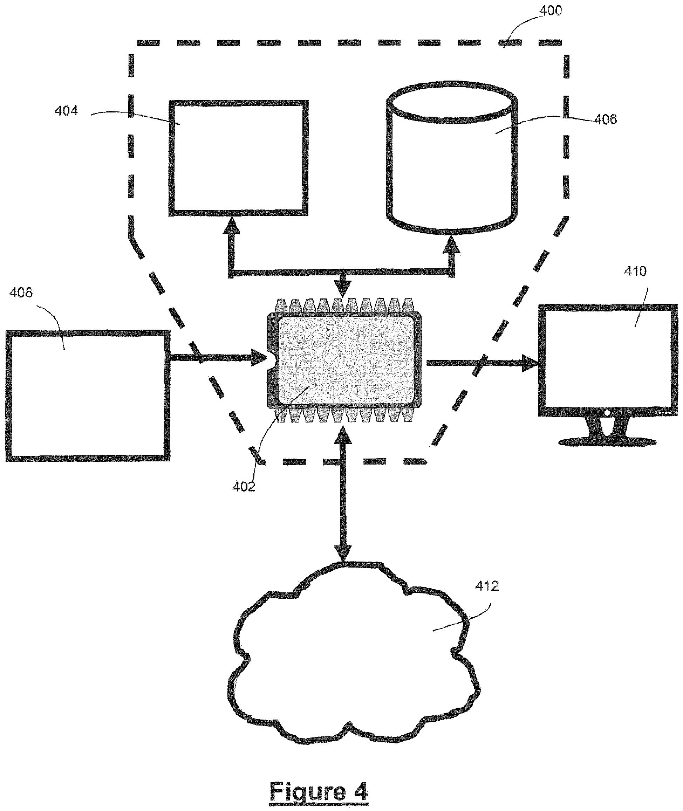

With reference now to Figure 4, there is shown an exemplary hardware architecture for a computer 400, which may be preferably configured as a peer device. For the purposes of the invention, the computer 400 may represent any type of computer, computer system, or programmable device e.g., multi-user or single-user computers, desktop computers, portable computers and devices, handheld devices, network devices, mobile phones, and so on. Although the computer 400 will hereinafter be referred to as a "computer", it should be appreciated that the term should be construed to encompass any type of apparatus which comprises suitable programmable electronic devices which are capable of carrying out the functionality of the computer 400.

Computer 400 typically includes at least one processor 402 coupled to memory 404. The at least one processor 402 may represent one or more processors (e.g. microprocessors), and the memory 404 may represent the random access memory (RAM) devices comprising the main storage of computer 400, as well as any supplemental levels of memory, e.g., cache memories, non-volatile or backup memories (e.g. programmable or flash memories), read-only memories, and the like. In addition, the memory 404 may be considered to include memory storage physically located elsewhere in computer 400, e.g., any cache memory in the processor 401, as well as any storage capacity used as a virtual memory, e.g., as stored on a mass non-volatile storage device 406 or another computer coupled to the computer 400 via a network 412.

The computer 400 also typically receives a number of inputs and outputs for communicating information externally. For interface with a user or an operator, the computer 400 typically includes one or more user input devices 408 (e.g., a keyboard, a mouse, a touchpad, a trackball, a keypad, a joystick, a stylus, and so on). The computer 400 may also include a display 410 (e.g., a CRT monitor, an LCD display panel, and the like). The interface to the computer 400 may also be achieved through an external terminal connected directly or remotely to the computer 400, or through another computer communicating with the computer 400 via the network 412, via a modem, or via some other type of communications channel.

The computer 400 operates under the control of an operating system, and executes or otherwise relies upon various computer software applications, components, programs, objects, modules, data structures, etc. The computer 400 communicates on the network 412, through a network interface which can be implemented in hardware or software, using a network protocol implemented in the operating system, for example.

In general, the routines executed to implement the embodiments of the invention, whether implemented as part of an operating system or a specific application; component, program, object, module or sequence of instructions will be referred to herein as "computer program code", or simply "program code". The computer program code typically comprises one or more instructions that are resident at various times in various memory and storage devices in a computer, and that, when read and executed by one or more processors in a computer, causes that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution. Examples of computer readable media include but are not limited to physical, recordable type media such as volatile and non-volatile memory devices 406, floppy and other removable disks, hard disk drives, optical disks (e.g., CD-ROM's, DVD's, etc.), among others, and transmission type media such as digital and analog communication links.

In addition, various program code described herein may be identified based upon the application or software component within which it is implemented in specific embodiments of the invention. However, it should be appreciated that any particular program nomenclature used herein is merely for convenience, and thus the invention should not be limited to use solely in any specific application identified and/or implied by such nomenclature. Furthermore, given the large number of manners in which computer programs may be organized into routines, procedures, methods, modules, objects, and the like, as well as the various manners in which program functionality may be allocated among various software layers that are resident within a typical computer (e.g., operating systems, libraries, APls, applications, applets, etc.), it should be appreciated that the invention is not limited to the specific organisation and allocation of program functionality described herein,

Those skilled in the art will recognize that the exemplary hardware architecture illustrated in Figure 4 is not intended to limit the present invention. Indeed, those skilled in the art will recognise that other alternative hardware and/or software environments may be used.

The terms "comprise" and "include", and any variations thereof required for grammatical reasons, are to be considered as interchangeable and accorded the widest possible interpretation.

It will be understood that the components shown in any of the drawings are not necessarily drawn to scale, and, like parts shown in several drawings are designated the same reference numerals.

It will be further understood that features from any of the embodiments may be combined with alternative described embodiments, even if such a combination is not explicitly recited hereinbefore but would be understood to be technically feasible by the person skilled in the art.

The invention is not limited to the embodiments hereinbefore described which may be varied in both construction and detail. The scope of the invention is defined by the appended claims.

## Claims

1. A decentralised database system comprising a plurality of peer devices, whereby each peer device is connected to at least one other peer device over a network;
the decentralised database system comprises accounts and each peer device controls one or more accounts associated with the decentralised database system;
such that, an updated state of the decentralised database system is agreed upon by at least two of the plurality of peer devices, whereby the at least two peer devices create sign-offs regarding the updated state of the decentralised database system using the accounts which the at least two peer devices control, wherein a sign-off is a cryptographic signature and wherein each sign-off is corresponding to the state information specific to each peer device for each of its one or more accounts; and, each peer device determines a current state of the database as being the state which has the greatest weight of sign-offs, where a peer device considers a state to have sign-offs of a given weight when that peer device has stored in its memory an enumeration of verifying accounts totalling the given weight, together with valid associated evidence data;
wherein, the evidence data is **characterised by**,
given an enumeration of verifying accounts, at least two peers are configured to enumerate a subset of verifying accounts, and having been given the sign-offs of the subset of verifying accounts, each of the at least two peers is configured to aggregate the sign-offs of the subset of verifying accounts so as to produce the evidence data;
given an enumeration of verifying accounts and evidence data, at least two peers are configured to verify that the evidence data was produced by aggregating the sign-offs of the subset of verifying accounts;
a pre-defined parameter determines the size of the subset of verifying accounts, and, for any marginal weight above a total stake of sign-offs available to a particular peer, the pre-defined parameter determines the probability that the particular peer would be capable of fraudulently producing valid evidence data claiming the higher weight, wherein the marginal weight of a block (200) is equal to the sum of account stakes of verifiers to that block (200).

2. A decentralised database system as claimed in claim 1, wherein, a peer device is provided with an enumeration of one or more verifying accounts from at least one other peer device, whereby, each verifier in the enumeration of one or more verifying accounts provided relates to an account controlled by the other peer device for which the other peer device claims to have a valid sign-off for, and/or, an account controlled by a different peer device for which the other peer device has been informed by the different peer device that the different peer device claims to have a valid sign-off for;
the peer device confirms the validity of the enumeration of verifying accounts received from the other peer device by using a challenge- response protocol;
whereby,
the challenge-response protocol comprises selecting a subset of verifying accounts from the enumeration of verifying accounts; and,
successfully responding to the challenge-response protocol comprises the peer device receiving sign-offs for the selected subset of verifying accounts;
such that,
the subset of verifying accounts which is selected is unknown to the other peer device when the other peer device provides the enumeration of verifying accounts.

3. A decentralised database system as claimed in claim 1, wherein, the at least two peers are configured to enumerate the subset of verifying accounts using a pseudo-random method of selecting the subset of verifying accounts from the enumeration of verifying accounts.

4. A decentralised database system as claimed in any of the preceding claims, wherein, a set of blocks (200) is maintained by each peer device; a new block (200) is generated by each peer device periodically and the new bock is added to the set of blocks (200); and, prior to adding the new block (200) to the set of blocks (200), the updated state of the decentralised database system is agreed upon.

5. A decentralised database system as claimed in claim 4, wherein, the evidence data is smaller in data size than the data size of the set of sign-offs which the evidence data verifies as existing.

6. A decentralised database system as claimed in any of the preceding claims, wherein, the decentralised database system splits the accounts of the decentralised database system into groups of accounts;
peer devices receive sign-offs from other peer devices for accounts which are in the same group(s) as any accounts controlled by the peer devices.

7. A decentralised database system as claimed in any of the preceding claims, wherein, the updated state of the decentralised database system is verified by a plurality of separate peer devices in a distributed fashion, wherein none of the plurality of the peer devices receives all of the valid sign-offs from all of the verifiers in the decentralised database system.

8. A decentralised database system as claimed in claim 4, whereby, each peer device of the decentralised database system further comprises a final block (200), such that the final block (200) of each peer device is only updated with the value of a most recently generated block (200) when the most recently generated block (200) has a marginal weight greater than two thirds of the total of all account stakes for that block (200), such that the marginal weight of a block (200) is given by the total stake of verifying accounts for that block (200).

9. A method of operating a decentralised database system, the decentralised database system comprising a plurality of peer devices, whereby each peer device is connected to at least one other peer device over a network; the decentralised database system comprising accounts and each peer device controlling one or more accounts associated with the decentralised database system;
such that, the method comprises the step of an updated state of the decentralised database system being agreed upon by at least two of the plurality of peer devices, whereby the at least two peer devices create sign- offs regarding the updated state of the decentralised database system using the accounts which the at least two peer devices control, wherein a sign-off is a cryptographic signature and wherein each sign-off is corresponding to the state information specific to each peer device for each of its one or more accounts;
and, the method further comprising the step of each peer device determining a current state of the database as being the state which has the greatest weight of sign-offs, where a peer device considers a state to have sign-offs of a given weight when that peer device has stored in its memory an enumeration of verifying accounts totalling the given weight, together with valid associated evidence data;
wherein, the method further comprises the steps of:
given an enumeration of verifying accounts, at least two peers are configured to carry out the step of enumerating a subset of verifying accounts, and having been given the sign-offs of the subset of verifying accounts, each of the at least two peers is configured to carry out the step of aggregating the sign-offs of the subset of verifying accounts so as to produce the evidence data;
given an enumeration of verifying accounts and evidence data, at least two peers are configured to carry out the step of verifying that the evidence data was produced by aggregating the sign-offs of the subset of verifying accounts;
and, the method comprises using a pre-defined parameter which determines the size of the subset of verifying accounts, and, for any marginal weight above a total stake of sign-offs available to a particular peer, the pre-defined parameter determines the probability that the particular peer would be capable of fraudulently producing valid evidence data claiming the higher weight, wherein the marginal weight of a block (200) is equal to the sum of account stakes of verifiers to that block (200).

10. A method of operating a decentralised database system as claimed in claim 9, wherein, the method comprises the step of a peer device being provided with an enumeration of verifying accounts from at least one other peer device, whereby, each verifier in the enumeration of verifying accounts provided relates to an account controlled by the other peer device for which the other peer device claims to have a valid sign-off for, and/or, an account controlled by a different peer device for which the other peer device has been informed by the different peer device that the different peer device claims to have a valid sign-off for;
the method comprises the step of the peer device confirming the validity of the enumeration of verifying accounts received from the other peer device by using a challenge-response protocol;
whereby,
the challenge-response protocol comprises the step of selecting a subset of verifying accounts from the enumeration of verifying accounts; and,
successfully responding to the challenge-response protocol comprises the step of the peer device receiving sign-offs for the selected subset of verifying accounts;
such that,
the subset of verifying accounts which is selected is unknown to the other peer device when the other peer device provides the enumeration of verifying accounts.

11. A method of operating a decentralised database system as claimed in any of claims 9 to 10, wherein, the at least two peers are configured to carry out the step of enumerating the subset of verifying accounts using a pseudo-random method of selecting the subset of verifying accounts from the enumeration of verifying accounts.

12. A method of operating a decentralised database system as claimed in any of claims 9 to 11, wherein, method comprises maintaining a set of blocks (200) by each peer device; and the method further comprises the steps of: a new block (200) being generated by each peer device periodically and the new bock (200) being added to the set of blocks (200); and, prior to the step of adding the new block (200) to the set of blocks (200), the method comprises the step of agreeing upon the updated state of the decentralised database system.

13. A method of operating a decentralised database system as claimed in claim 12, wherein, the evidence data is smaller in data size than the data size of the set of sign-offs which the evidence data verifies as existing.

14. A method of operating a decentralised database system as claimed in any of claims 9 to 13, wherein, the method comprises the step of splitting the accounts of the decentralised database system into groups of accounts; and the step of the peer devices receiving sign-offs from other peer devices for accounts which are in the same group(s) as any accounts controlled by the peer devices.

15. A method of operating a decentralised database system as claimed in claim 12, wherein, the method comprises the step of each peer device of the decentralised database system generating a final block (200), such that the final block (200) of each peer device is only updated with the value of a most recently generated block (200) by the method, when the most recently generated block (200) has a marginal weight greater than two thirds of the total of all account stakes for that block (200), such that the marginal weight of a block (200) is given by the total stake of verifying accounts for that block(200).

## Patentansprüche

1. Dezentralisiertes Datenbanksystem, umfassend eine Vielzahl von Peer-Vorrichtungen, wobei jede Peer-Vorrichtung über ein Netzwerk mit mindestens einer anderen Peer-Vorrichtung verbunden ist;
wobei das dezentralisierte Datenbanksystem Konten umfasst und jede Peer-Vorrichtung ein oder mehrere Konten steuert, die mit dem dezentralisierten Datenbanksystem assoziiert sind;
so dass ein aktualisierter Zustand des dezentralisierten Datenbanksystems von mindestens zwei der Vielzahl von Peer-Vorrichtungen abgestimmt wird, wobei die mindestens zwei Peer-Vorrichtungen Abzeichnungen in Bezug auf den aktualisierten Zustand des dezentralisierten Datenbanksystems unter Verwendung der Konten, die die mindestens zwei Peer-Vorrichtungen steuern, erzeugen, wobei eine Abzeichnung eine kryptographische Signatur ist und wobei jede Abzeichnung den Zustandsinformationen entspricht, die für jede Peer-Vorrichtung für jedes ihres einen oder ihrer mehreren Konten spezifisch sind; und wobei jede Peer-Vorrichtung einen aktuellen Zustand der Datenbank als den Zustand bestimmt, der das höchste Gewicht der Abzeichnungen aufweist, wobei eine Peer-Vorrichtung einen Zustand als Abzeichnungen mit einem gegebenen Gewicht aufweisend ansieht, wenn jene Peer-Vorrichtung in ihrem Speicher eine Aufzählung von verifizierenden Konten, die sich auf das gegebene Gewicht belaufen, zusammen mit gültigen assoziierten Belegdaten gespeichert aufweist;
wobei die Belegdaten **gekennzeichnet sind durch**:
in Anbetracht einer Aufzählung von verifizierenden Konten sind mindestens zwei Peers dazu konfiguriert, ein Teilsatz von verifizierenden Konten aufzuzählen, und nachdem ihnen die Abzeichnungen des Teilsatzes von verifizierenden Konten gegeben wurden, ist jeder der mindestens zwei Peers dazu konfiguriert, die Abzeichnungen des Teilsatzes von verifizierenden Konten zu aggregieren, um die Belegdaten zu produzieren;
in Anbetracht einer Aufzählung von verifizierenden Konten und von Belegdaten sind mindestens zwei Peers dazu konfiguriert zu verifizieren, dass die Belegdaten durch Aggregieren der Abzeichnungen des Teilsatzes von verifizierenden Konten produziert wurden;
ein vordefinierter Parameter bestimmt die Größe des Teilsatzes von verifizierenden Konten und für ein beliebiges grenzwertiges Gewicht über einem Gesamtanteil von Abzeichnungen, die für einen bestimmten Peer verfügbar sind, bestimmt der vordefinierte Parameter die Wahrscheinlichkeit, dass der bestimmte Peer dazu in der Lage wäre, gültige Belegdaten, die das höhere Gewicht angeben, in betrügerischer Absicht zu produzieren, wobei das grenzwertige Gewicht eines Blocks (200) gleich der Summe von Kontenanteilen von Verifizierern für jenen Block (200) ist.

2. Dezentralisiertes Datenbanksystem nach Anspruch 1, wobei eine Peer-Vorrichtung mit einer Aufzählung von einem oder mehreren verifizierenden Konten von mindestens einer anderen Peer-Vorrichtung bereitgestellt wird, wobei jeder Verifizierer in der bereitgestellten Aufzählung von einem oder mehreren verifizierenden Konten ein Konto, das von der anderen Peer-Vorrichtung gesteuert wird und von der die andere Peer-Vorrichtung angibt, dass sie eine gültige Abzeichnung dafür aufweist, und/oder ein Konto, das von einer unterschiedlichen Peer-Vorrichtung gesteuert wird und über das die andere Peer-Vorrichtung von der unterschiedlichen Peer-Vorrichtung informiert wurde, dass die unterschiedliche Peer-Vorrichtung angibt, dass sie eine gültige Abzeichnung dafür aufweist, betrifft;
wobei die Peer-Vorrichtung die Gültigkeit der Aufzählung von verifizierenden Konten, die von der anderen Peer-Vorrichtung empfangen wurde, durch Verwenden eines Challenge-Response-Protokolls bestätigt;
wobei
das Challenge-Response-Protokoll ein Auswählen eines Teilsatzes von verifizierenden Konten von der Aufzählung von verifizierenden Konten umfasst; und
ein erfolgreiches Antworten auf das Challenge-Response-Protokoll umfasst, dass die Peer-Vorrichtung Abzeichnungen für den ausgewählten Teilsatz von verifizierenden Konten empfängt;
so dass
der Teilsatz von verifizierenden Konten, der ausgewählt wird, der anderen Peer-Vorrichtung unbekannt ist, wenn die andere Peer-Vorrichtung die Aufzählung von verifizierenden Konten bereitstellt.

3. Dezentralisiertes Datenbanksystem nach Anspruch 1, wobei die mindestens zwei Peers dazu konfiguriert sind, den Teilsatz von verifizierenden Konten unter Verwendung eines pseudozufälligen Verfahrens eines Auswählens des Teilsatzes von verifizierenden Konten von der Aufzählung von verifizierenden Konten aufzuzählen.

4. Dezentralisiertes Datenbanksystem nach einem der vorhergehenden Ansprüche, wobei ein Satz von Blöcken (200) von jeder Peer-Vorrichtung gepflegt wird; ein neuer Block (200) von jeder Peer-Vorrichtung periodisch erzeugt wird und der neue Block zu dem Satz von Blöcken (200) hinzugefügt wird und vor dem Hinzufügen des neuen Blocks (200) zu dem Satz von Blöcken (200) der aktualisierte Zustand des dezentralisierten Datenbanksystems abgestimmt wird.

5. Dezentralisiertes Datenbanksystem nach Anspruch 4, wobei die Datengröße der Belegdaten kleiner als die Datengröße des Satzes von Abzeichnungen ist, den die Belegdaten als existierend verifizieren.

6. Dezentralisiertes Datenbanksystem nach einem der vorhergehenden Ansprüche, wobei das dezentralisierte Datenbanksystem die Konten des dezentralisierten Datenbanksystems in Gruppen von Konten aufteilt;
wobei Peer-Vorrichtungen Abzeichnungen von anderen Peer-Vorrichtungen für Konten empfangen, die in derselben bzw. denselben Gruppen wie beliebige Konten sind, die von den Peer-Vorrichtungen gesteuert werden.

7. Dezentralisiertes Datenbanksystem nach einem der vorhergehenden Ansprüche, wobei der aktualisierte Zustand des dezentralisierten Datenbanksystems von einer Vielzahl von separaten Peer-Vorrichtungen auf eine verteilte Weise verifiziert wird, wobei keine der Vielzahl von Peer-Vorrichtungen alle gültigen Abzeichnungen von allen Verifizierern in dem dezentralisierten Datenbanksystem empfängt.

8. Dezentralisiertes Datenbanksystem nach Anspruch 4, wobei jede Peer-Vorrichtung des dezentralisierten Datenbanksystems weiterhin einen letzten Block (200) umfasst, so dass der letzte Block (200) jeder Peer-Vorrichtung nur mit dem Wert eines zuletzt erzeugten Blocks (200) aktualisiert wird, wenn der zuletzt erzeugte Block (200) ein grenzwertiges Gewicht aufweist, das höher als zwei Drittel der Summe aller Kontenanteile für jenen Block (200) ist, so dass das grenzwertige Gewicht eines Blocks (200) durch den Gesamtanteil von verifizierenden Konten für jenen Block (200) angegeben wird.

9. Verfahren zum Betreiben eines dezentralisierten Datenbanksystems, wobei das dezentralisierte Datenbanksystem eine Vielzahl von Peer-Vorrichtungen umfasst, wobei jede Peer-Vorrichtung über ein Netzwerk mit mindestens einer anderen Peer-Vorrichtung verbunden ist; wobei das dezentralisierte Datenbanksystem Konten umfasst und jede Peer-Vorrichtung ein oder mehrere Konten steuert, die mit dem dezentralisierten Datenbanksystem assoziiert sind;
so dass das Verfahren den Schritt eines Abstimmens eines aktualisierten Zustands des dezentralisierten Datenbanksystems durch mindestens zwei der Vielzahl von Peer-Vorrichtungen umfasst, wobei die mindestens zwei Peer-Vorrichtungen Abzeichnungen in Bezug auf den aktualisierten Zustand des dezentralisierten Datenbanksystems unter Verwendung der Konten, die die mindestens zwei Peer-Vorrichtungen steuern, erzeugen, wobei eine Abzeichnung eine kryptographische Signatur ist und wobei jede Abzeichnung den Zustandsinformationen entspricht, die für jede Peer-Vorrichtung für jedes ihres einen oder ihrer mehreren Konten spezifisch sind;
und das Verfahren weiterhin den Schritt eines Bestimmens eines aktuellen Zustands der Datenbank als den Zustand, der das höchste Gewicht der Abzeichnungen aufweist, durch jede Peer-Vorrichtung umfasst, wobei eine Peer-Vorrichtung einen Zustand als Abzeichnungen mit einem gegebenen Gewicht aufweisend ansieht, wenn jene Peer-Vorrichtung in ihrem Speicher eine Aufzählung von verifizierenden Konten, die sich auf das gegebene Gewicht belaufen, zusammen mit gültigen assoziierten Belegdaten gespeichert aufweist;
wobei das Verfahren weiterhin die Schritte umfasst:
in Anbetracht einer Aufzählung von verifizierenden Konten sind mindestens zwei Peers dazu konfiguriert, den Schritt eines Aufzählens eines Teilsatzes von verifizierenden Konten durchzuführen, und nachdem ihnen die Abzeichnungen des Teilsatzes von verifizierenden Konten gegeben wurden, ist jeder der mindestens zwei Peers dazu konfiguriert, den Schritt eines Aggregierens der Abzeichnungen des Teilsatzes von verifizierenden Konten durchzuführen, um die Belegdaten zu produzieren;
in Anbetracht einer Aufzählung von verifizierenden Konten und von Belegdaten sind mindestens zwei Peers dazu konfiguriert, den Schritt eines Verifizierens durchzuführen, dass die Belegdaten durch Aggregieren der Abzeichnungen des Teilsatzes von verifizierenden Konten produziert wurden;
und das Verfahren ein Verwenden eines vordefinierten Parameters umfasst, der die Größe des Teilsatzes von verifizierenden Konten bestimmt, und wobei für ein beliebiges grenzwertiges Gewicht über einem Gesamtanteil von Abzeichnungen, die für einen bestimmten Peer verfügbar sind, der vordefinierte Parameter die Wahrscheinlichkeit bestimmt, dass der bestimmte Peer dazu in der Lage wäre, gültige Belegdaten, die das höhere Gewicht angeben, in betrügerischer Absicht zu produzieren, wobei das grenzwertige Gewicht eines Blocks (200) gleich der Summe von Kontenanteilen von Verifizierern für jenen Block (200) ist.

10. Verfahren zum Betreiben eines dezentralisierten Datenbanksystems nach Anspruch 9, wobei das Verfahren den Schritt eines Bereitstellens einer Peer-Vorrichtung mit einer Aufzählung von verifizierenden Konten von mindestens einer anderen Peer-Vorrichtung umfasst, wobei jeder Verifizierer in der bereitgestellten Aufzählung von verifizierenden Konten ein Konto, das von der anderen Peer-Vorrichtung gesteuert wird und von der die andere Peer-Vorrichtung angibt, dass sie eine gültige Abzeichnung dafür aufweist, und/oder ein Konto, das von einer unterschiedlichen Peer-Vorrichtung gesteuert wird und über das die andere Peer-Vorrichtung von der unterschiedlichen Peer-Vorrichtung informiert wurde, dass die unterschiedliche Peer-Vorrichtung angibt, dass sie eine gültige Abzeichnung dafür aufweist, betrifft;
wobei das Verfahren den Schritt eines Bestätigens der Gültigkeit der Aufzählung von verifizierenden Konten, die von der anderen Peer-Vorrichtung empfangen wurde, durch die Peer-Vorrichtung durch Verwenden eines Challenge-Response-Protokolls umfasst;
wobei
das Challenge-Response-Protokoll den Schritt eines Auswählens eines Teilsatzes von verifizierenden Konten von der Aufzählung von verifizierenden Konten umfasst; und
ein erfolgreiches Antworten auf das Challenge-Response-Protokoll den Schritt umfasst, dass die Peer-Vorrichtung Abzeichnungen für den ausgewählten Teilsatz von verifizierenden Konten empfängt;
so dass
der Teilsatz von verifizierenden Konten, der ausgewählt wird, der anderen Peer-Vorrichtung unbekannt ist, wenn die andere Peer-Vorrichtung die Aufzählung von verifizierenden Konten bereitstellt.

11. Verfahren zum Betreiben eines dezentralisierten Datenbanksystems nach einem der Ansprüche 9 bis 10, wobei die mindestens zwei Peers dazu konfiguriert sind, den Schritt des Aufzählens des Teilsatzes von verifizierenden Konten unter Verwendung eines pseudozufälligen Verfahrens eines Auswählens des Teilsatzes von verifizierenden Konten von der Aufzählung von verifizierenden Konten durchzuführen.

12. Verfahren zum Betreiben eines dezentralisierten Datenbanksystems nach einem der Ansprüche 9 bis 11, wobei das Verfahren ein Pflegen eines Satzes von Blöcken (200) durch jede Peer-Vorrichtung umfasst und das Verfahren weiterhin die Schritte umfasst: periodisches Erzeugen eines neuen Blocks (200) durch jede Peer-Vorrichtung und Hinzufügen des neuen Blocks (200) zu dem Satz von Blöcken (200); und das Verfahren vor dem Schritt des Hinzufügens des neuen Blocks (200) zu dem Satz von Blöcken (200) den Schritt eines Abstimmens des aktualisierten Zustands des dezentralisierten Datenbanksystems umfasst.

13. Verfahren zum Betreiben eines dezentralisierten Datenbanksystems nach Anspruch 12, wobei die Datengröße der Belegdaten kleiner als die Datengröße des Satzes von Abzeichnungen ist, den die Belegdaten als existierend verifizieren.

14. Verfahren zum Betreiben eines dezentralisierten Datenbanksystems nach einem der Ansprüche 9 bis 13, wobei das Verfahren den Schritt eines Aufteilens der Konten des dezentralisierten Datenbanksystems in Gruppen von Konten und den Schritt eines Empfangens von Abzeichnungen durch die Peer-Vorrichtungen von anderen Peer-Vorrichtungen für Konten, die in derselben bzw. denselben Gruppen wie beliebige Konten sind, die von den Peer-Vorrichtungen gesteuert werden, umfasst.

15. Verfahren zum Betreiben eines dezentralisierten Datenbanksystems nach Anspruch 12, wobei das Verfahren den Schritt eines Erzeugens eines letzten Blocks (200) durch jede Peer-Vorrichtung des dezentralisierten Datenbanksystems umfasst, so dass der letzte Block (200) jeder Peer-Vorrichtung nur mit dem Wert eines durch das Verfahren zuletzt erzeugten Blocks (200) aktualisiert wird, wenn der zuletzt erzeugte Block (200) ein grenzwertiges Gewicht aufweist, das höher als zwei Drittel der Summe aller Kontenanteile für jenen Block (200) ist, so dass das grenzwertige Gewicht eines Blocks (200) durch den Gesamtanteil von verifizierenden Konten für jenen Block (200) angegeben wird.

## Revendications

1. Système de base de données décentralisé comprenant une pluralité de dispositifs homologues, moyennant quoi chaque dispositif homologue est connecté à au moins un autre dispositif homologue sur un réseau;
le système de base de données décentralisé comprend des comptes et chaque dispositif homologue commande un ou plusieurs comptes associés au système de base de données décentralisé;
de telle sorte qu'un état mis à jour du système de base de données décentralisé est accepté par au moins deux de la pluralité de dispositifs homologues, moyennant quoi les au moins deux dispositifs homologues créent des approbations en ce qui concerne l'état mis à jour du système de base de données décentralisé en utilisant les comptes que les au moins deux dispositifs homologues commandent, dans lequel une approbation est une signature cryptographique et dans lequel chaque approbation correspond aux informations d'état spécifiques à chaque dispositif homologue pour chacun de ses un ou plusieurs comptes; et, chaque dispositif homologue détermine un état actuel de la base de données comme étant l'état qui a le plus grand poids d'approbations, où un dispositif homologue considère qu'un état a des approbations d'un poids donné lorsque ce dispositif homologue a stocké dans sa mémoire une énumération de comptes de vérification totalisant le poids donné, conjointement avec des données de preuve associées valides;
dans lequel, les données de preuve sont **caractérisées par**,
vu une énumération de comptes de vérification, au moins deux homologues sont configurés pour énumérer un sous-ensemble de comptes de vérification, et ayant reçu les approbations du sous-ensemble de comptes de vérification, chacun des au moins deux homologues est configuré pour agréger les approbations du sous-ensemble de comptes de vérification de manière à produire les données de preuve;
vu une énumération de comptes de vérification et de données de preuve, au moins deux homologues sont configurés pour vérifier que les données de preuve ont été produites par l'agrégation des approbations du sous-ensemble de comptes de vérification;
un paramètre prédéfini détermine la taille du sous-ensemble de comptes de vérification, et, pour tout poids marginal au-dessus d'une mise totale d'approbations disponibles pour un homologue particulier, le paramètre prédéfini détermine la probabilité pour que l'homologue particulier soit capable de produire frauduleusement des données de preuve valides revendiquant le poids plus élevé, dans lequel le poids marginal d'un bloc (200) est égal à la somme de mises de comptes de vérificateurs pour ce bloc (200) .

2. Système de base de données décentralisé selon la revendication 1, dans lequel, on fournit à un dispositif homologue une énumération d'un ou plusieurs comptes de vérification à partir d'au moins un autre dispositif homologue, moyennant quoi chaque vérificateur dans l'énumération d'un ou plusieurs comptes de vérification fournie se rapporte à un compte commandé par l'autre dispositif homologue pour lequel l'autre dispositif homologue revendique avoir une approbation valide, et/ou, à un compte commandé par un dispositif homologue différent pour lequel l'autre dispositif homologue a été informé par le dispositif homologue différent que le dispositif homologue différent revendique avoir une approbation valide;
le dispositif homologue confirme la validité de l'énumération de comptes de vérification reçue à partir de l'autre dispositif homologue en utilisant un protocole défi-réponse;
moyennant quoi
le protocole défi-réponse comprend la sélection d'un sous-ensemble de comptes de vérification à partir de l'énumération de comptes de vérification; et,
répondre avec succès au protocole défi-réponse comprend de recevoir, par le dispositif homologue, des approbations pour le sous-ensemble sélectionné de comptes de vérification;
de sorte que,
le sous-ensemble de comptes de vérification qui est sélectionné est inconnu de l'autre dispositif homologue lorsque l'autre dispositif homologue fournit l'énumération de comptes de vérification.

3. Système de base de données décentralisé selon la revendication 1, dans lequel, au moins deux homologues sont configurés pour énumérer le sous-ensemble de comptes de vérification en utilisant un procédé de sélection pseudo-aléatoire du sous-ensemble de comptes de vérification à partir de l'énumération de comptes de vérification.

4. Système de base de données décentralisé selon l'une quelconque des revendications précédentes, dans lequel, un ensemble de blocs (200) est maintenu par chaque dispositif homologue; un nouveau bloc (200) est généré périodiquement par chaque dispositif homologue et le nouveau bock est ajouté à l'ensemble de blocs (200); et, avant d'ajouter le nouveau bloc (200) à l'ensemble de blocs (200), l'état mis à jour du système de base de données décentralisé est convenu.

5. Système de base de données décentralisé selon la revendication 4, dans lequel, les données de preuve sont plus petites en taille de données que la taille des données de l'ensemble d'approbations que les données de preuve vérifient comme existantes.

6. Système de base de données décentralisé selon l'une quelconque des revendications précédentes, dans lequel, le système de base de données décentralisé divise les comptes du système de base de données décentralisé en groupes de comptes;
des dispositifs homologues reçoivent des approbations à partir d'autres dispositifs homologues pour des comptes qui sont dans le(s) même(s) groupe(s) que tous les comptes commandés par les dispositifs homologues.

7. Système de base de données décentralisé selon l'une quelconque des revendications précédentes, dans lequel l'état mis à jour du système de base de données décentralisé est vérifié par une pluralité de dispositifs homologues distincts d'une manière distribuée, dans lequel aucun de la pluralité des dispositifs homologues ne reçoit la totalité des approbations valides à partir de tous les vérificateurs du système de base de données décentralisé.

8. Système de base de données décentralisé selon la revendication 4, dans lequel, chaque dispositif homologue du système de base de données décentralisé comprend en outre un bloc final (200), de telle sorte que le bloc final (200) de chaque dispositif homologue est mis à jour uniquement avec la valeur d'un bloc généré le plus récemment (200) lorsque le bloc généré le plus récemment (200) a un poids marginal supérieur à deux tiers du total de toutes les mises de comptes pour ce bloc (200), de telle sorte que le poids marginal d'un bloc (200) est donné par la mise totale de comptes de vérification pour ce bloc (200) .

9. Procédé de fonctionnement d'un système de base de données décentralisé, le système de base de données décentralisé comprenant une pluralité de dispositifs homologues, moyennant quoi chaque dispositif homologue est connecté à au moins un autre dispositif homologue sur un réseau; le système de base de données décentralisé comprenant des comptes et chaque dispositif homologue commandant un ou plusieurs comptes associés au système de base de données décentralisé;
de telle sorte que, le procédé comprend l'étape consistant à convenir d'un état mis à jour du système de base de données décentralisé par au moins deux de la pluralité de dispositifs homologues, moyennant quoi les au moins deux dispositifs homologues créent des approbations concernant l'état mis à jour du système de base de données décentralisé en utilisant les comptes que les au moins deux dispositifs homologues commandent, dans lequel une approbation est une signature cryptographique et dans lequel chaque approbation correspond aux informations d'état spécifiques à chaque dispositif homologue pour chacun de ses un ou plusieurs comptes;
et, le procédé comprenant en outre l'étape consistant à déterminer, par chaque dispositif homologue, un état actuel de la base de données comme étant l'état qui a le plus grand poids d'approbations, où un dispositif homologue considère qu'un état a des approbations d'un poids donné lorsque que dispositif homologue a stocké dans sa mémoire une énumération de comptes de vérification totalisant le poids donné, conjointement avec des données de preuve associées valides;
dans lequel le procédé comprend en outre les étapes consistant à :
vu une énumération de comptes de vérification, au moins deux homologues sont configurés pour effectuer l'étape consistant à énumérer un sous-ensemble de comptes de vérification, et ayant reçu les approbations du sous-ensemble de comptes de vérification, chacun des au moins deux homologues est configuré pour effectuer l'étape consistant à agréger les approbations du sous-ensemble de comptes de vérification de manière à produire les données de preuve;
vu une énumération de comptes de vérification et de données de preuve, au moins deux homologues sont configurés pour effectuer l'étape consistant à vérifier que les données de preuve ont été produites par l'agrégation des approbations du sous-ensemble de comptes de vérification;
et, le procédé comprend d'utiliser un paramètre prédéfini qui détermine la taille du sous-ensemble de comptes de vérification, et, pour tout poids marginal au-dessus d'une mise totale d'approbations disponibles pour un homologue particulier, le paramètre prédéfini détermine la probabilité pour que l'homologue particulier soit capable de produire frauduleusement des données de preuve valides revendiquant le poids plus élevé, dans lequel le poids marginal d'un bloc (200) est égal à la somme de mises de comptes de vérificateurs pour ce bloc (200).

10. Procédé de fonctionnement d'un système de base de données décentralisé selon la revendication 9, dans lequel, le procédé comprend l'étape consistant à fournir à un dispositif homologue une énumération de comptes de vérification à partir d'au moins un autre dispositif homologue, moyennant quoi chaque vérificateur dans l'énumération de comptes de vérification fournie se rapporte à un compte commandé par l'autre dispositif homologue pour lequel l'autre dispositif homologue revendique avoir une approbation valide, et/ou, à un compte commandé par un dispositif homologue différent pour lequel l'autre dispositif homologue a été informé par le dispositif homologue différent que le dispositif homologue différent revendique avoir une approbation valide;
le procédé comprend l'étape consistant à confirmer, par le dispositif homologue, la validité de l'énumération de comptes de vérification reçue à partir de l'autre dispositif homologue en utilisant un protocole défi-réponse;
moyennant quoi
le protocole défi-réponse comprend l'étape consistant à sélectionner un sous-ensemble de comptes de vérification à partir de l'énumération de comptes de vérification; et,
répondre avec succès au protocole défi-réponse comprend l'étape consistant à recevoir, par le dispositif homologue, des approbations pour le sous-ensemble sélectionné de comptes de vérification;
de sorte que,
le sous-ensemble de comptes de vérification qui est sélectionné est inconnu de l'autre dispositif homologue lorsque l'autre dispositif homologue fournit l'énumération de comptes de vérification.

11. Procédé de fonctionnement d'un système de base de données décentralisé selon l'une quelconque des revendications 9 à 10, dans lequel, au moins deux homologues sont configurés pour réaliser l'étape consistant à énumérer le sous-ensemble de comptes de vérification en utilisant un procédé de sélection pseudo-aléatoire du sous-ensemble de comptes de vérification à partir de l'énumération de comptes de vérification.

12. Procédé de fonctionnement d'un système de base de données décentralisé selon l'une quelconque des revendications 9 à 11, dans lequel, le procédé comprend de maintenir un ensemble de blocs (200) par chaque dispositif homologue; et le procédé comprend en outre les étapes consistant à : générer périodiquement un nouveau bloc (200) par chaque dispositif homologue et ajouter le nouveau bock (200) à l'ensemble de blocs (200) ; et, avant l'étape consistant à ajouter le nouveau bloc (200) à l'ensemble de blocs (200), le procédé comprend l'étape consistant à convenir de l'état mis à jour du système de base de données décentralisé.

13. Procédé de fonctionnement d'un système de base de données décentralisé selon la revendication 12, dans lequel, les données de preuve sont plus petites en taille de données que la taille des données de l'ensemble d'approbations que les données de preuve vérifient comme existantes.

14. Procédé de fonctionnement d'un système de base de données décentralisé selon l'une quelconque des revendications 9 à 13, dans lequel, le procédé comprend l'étape consistant à diviser les comptes du système de base de données décentralisé en groupes de comptes; et l'étape consistant à recevoir, par les dispositifs homologues, des approbations à partir d'autres dispositifs homologues pour des comptes qui sont dans le(s) même(s) groupe(s) que tous les comptes commandés par les dispositifs homologues.

15. Procédé de fonctionnement d'un système de base de données décentralisé selon la revendication 12, dans lequel, le procédé comprend l'étape consistant à générer par chaque dispositif homologue du système de base de données décentralisé un bloc final (200), de telle sorte que le bloc final (200) de chaque dispositif homologue est mis à jour uniquement avec la valeur d'un bloc le plus récemment généré (200) par le procédé, lorsque le bloc le plus récemment généré (200) a un poids marginal supérieur à deux tiers du total de toutes les mises de comptes pour ce bloc (200), de telle sorte que le poids marginal d'un bloc (200) est donné par la mise totale de comptes de vérification pour ce bloc (200).
